# EUROPÄISCHE PATENTANMELDUNG

(11) **EP 3 486 504 A1**
(43) Veröffentlichungstag der Anmeldung: **22.05.2019**
(21) Anmeldenummer: 17201846.7
(22) Anmeldetag: 15.11.2017
(51) Int. Cl.: F16B 13/06, F16B 2/00

(54) **BEFESTIGUNGSELEMENT MIT PARTIKELBESCHICHTUNG**

(71) Anmelder: HILTI Aktiengesellschaft, 9494 Schaan (LI)
(72) Erfinder: Frensemeier, Mareike, 9470 Buchs (CH); Kondratiuk, Jens, 9470 Buchs (CH); Guevara Arriola, Arturo, 9470 Buchs (CH)
(74) Vertreter: Hilti Aktiengesellschaft Corporate Intellectual Property

(57) **Zusammenfassung**

Die Erfindung betrifft ein Befestigungselement, insbesondere einen Spreizanker, mit einem Bolzen (10) und einem am Bolzen angeordneten Halteelement (20) zum Einleiten von Zugkräften in den Bolzen, wobei der Bolzen eine metallische erste Reibfläche (19) aufweist und wobei das Halteelement eine der ersten Reibfläche zugeordnete metallische zweite Reibfläche (29) aufweist. Erfindungsgemäss ist vorgesehen, dass auf zumindest einer der beiden Reibflächen eine Beschichtung (60) angeordnet ist, in der, vorzugsweise harte, Partikel (61) eingebettet sind.

## Beschreibung

Die Erfindung betrifft ein Befestigungselement, vorzugsweise einen Spreizanker, gemäss dem Oberbegriff des Anspruchs 1. Ein solches Befestigungselement ist ausgestattet mit einem Bolzen und einem am Bolzen angeordneten Halteelement zum Einleiten von Zugkräften in den Bolzen, wobei der Bolzen eine metallische erste Reibfläche aufweist und wobei das Halteelement eine der ersten Reibfläche zugeordnete metallische zweite Reibfläche aufweist.

Die EP3104025 A1 und die Europäische Patentanmeldung mit dem Anmeldeaktenzeichen 16179695.8 beschreiben Spreizanker, bei denen zwischen Bolzen und Spreizkörper Beschichtungen vorgesehen sind. Die EP1900945 A1 und die JP57083710 A2 zeigen Schraubverbinder, die im Gewindebereich beschichtet sind.

Aufgabe der Erfindung ist es, ein besonders leistungsfähiges und zuverlässiges Befestigungselement anzugeben, welches besonders einfach gefertigt werden kann.

Die Aufgabe wird erfindungsgemäss durch ein Befestigungselement mit den Merkmalen des Anspruchs 1 gelöst. Bevorzugte Ausführungsformen sind in den abhängigen Ansprüchen angegeben.

Ein erfindungsgemässes Befestigungselement ist dadurch gekennzeichnet, dass auf zumindest einer der beiden Reibflächen eine Beschichtung angeordnet ist, in der, vorzugsweise harte, Partikel eingebettet sind.

Ein Grundgedanke der Erfindung kann darin gesehen werden, zwischen den beiden benachbarten metallischen Reibflächen eine Beschichtung vorzusehen, welche Partikel, vorzugsweise harte Partikel, enthält. Hierdurch kann das Reibverhalten an beiden Reibflächen modifiziert werden, was wiederum vorteilhaft für die Leistungsfähigkeit, insbesondere die Tragfähigkeit, des Befestigungselements sein kann. So kann beispielsweise einem unerwünschten Festfressen und/oder Fressverschleiss in besonders einfacher Weise entgegengewirkt werden, die Abriebfestigkeit verbessert werden und/oder der Reibungskoeffizient gezielt verändert, insbesondere erhöht werden, was alles zu einer besseren Leistungsfähigkeit, insbesondere Tragfähigkeit, in statischen oder dynamischen Situationen führen kann. Insbesondere kann auch in besonders einfacher Weise ein variables Reibverhalten vorgesehen werden. So kann beispielsweise vorgesehen werden, dass das Reibverhalten zunächst, insbesondere bei geringer Anpresskraft, durch die Matrix der Beschichtung bestimmt wird, und anschliessend, insbesondere bei hoher Anpresskraft, durch die Partikel, die bei entsprechender Belastung der Beschichtung prozessdominierend werden können.

Unter dem Bolzen kann in fachüblicher Weise ein längliches, stabartiges Bauteil verstanden werden. Er kann ein Gewinde aufweisen, muss dies aber nicht. Das Halteelement ist zum Einleiten von Zugkräften, also axial gerichteten, Kräften in den Bolzen geeignet, wobei diese Zugkräfte auch Zwangskräfte sein können, welche den Bolzen in Position halten können, was insbesondere der Fall sein kann, wenn das Halteelement wie weiter unten erläutert ein Spreizkörper ist, der vom Bolzen an eine Lochwand angepresst wird. Der Bolzen kann einteilig sein oder auch aus mehreren separaten Komponenten bestehen.

Die beiden Reibflächen sind metallisch ausgebildet, das heisst sie sind jeweils an einem Metallkörper gebildet. Der Bolzen und das Halteelement sind somit zumindest im Bereich ihrer jeweiligen Reibfläche, vorzugsweise auch vollständig, aus einem Metallmaterial gebildet. An den beiden Reibflächen reiben die Bolzen bei der bestimmungsgemässen Installation des Befestigungselements aneinander. Die beiden Reibflächen bilden also ein Reibflächenpaar.

An zumindest einer der Reibflächen oder an beiden Reibflächen kann zusätzlich zur Beschichtung jeweils noch zumindest eine Zusatzbeschichtung vorgesehen werden, beispielsweise eine Korrosionsschutzschicht. Insbesondere kann vorgesehen sein, dass die Beschichtung die Zusatzbeschichtung bedeckt, das heisst dass die Zusatzbeschichtung unter der Beschichtung an der jeweiligen Reibfläche angeordnet ist. Zusätzlich zu den genannten Partikeln kann die Beschichtung auch noch Zusatzpartikel mit anderen Eigenschaften enthalten.

Das Befestigungselement kann vorzugsweise ein Spreizanker sein.

Besonders bevorzugt ist es, dass das Halteelement ein Spreizkörper ist, und dass der Bolzen einen Spreizbereich für den Spreizkörper aufweist. Demgemäss sind also die erfindungsgemässe Beschichtung mit Partikeln am Spreizmechanismus eines Spreizankers vorgesehen. Eine Anwendung in diesem Bereich kann insbesondere bei zyklisch belasteten Spreizankern vorteilhaft sein. Insbesondere kann der Spreizbereich einen Keil bilden, den Spreizkörper radial nach aussen drängt, wenn der Bolzen in einer Auszugsrichtung relativ zum Spreizkörper versetzt wird. Der Spreizkörper kann insbesondere eine Spreizhülse sein und/oder der Spreizbereich ein Spreizkonus.

Es kann aber auch vorgesehen sein, dass das Halteelement eine Mutter ist, die mit dem Bolzen verschraubt ist. In diesem Fall sind die beiden Reibflächen an der Verschraubung der Mutter vorgesehen. Hierdurch kann das gezielte Einstellen einer Vorspannung weiter verbessert werden. Sofern das Befestigungselement ein Spreizanker ist, kann eine erfindungsgemässe Beschichtung enthaltend Partikel entweder am Spreizmechanismus oder an der gegebenenfalls vorhandenen Mutter des Spreizankers vorgesehen sein, oder auch sowohl am Spreizmechanismus als auch an der Mutter.

Besonders bevorzugt ist es, dass die Beschichtung, in der Partikel eingebettet sind, zumindest auf der ersten Reibfläche, also auf dem Bolzen, angeordnet ist. Dies kann die Herstellung weiter vereinfachen.

Es kann ausreichend sein, dass auf genau einer der beiden Reibflächen eine Beschichtung angeordnet ist, in der Partikel eingebettet sind, was auch im Hinblick auf den Herstellungsaufwand vorteilhaft sein kann. Diese genau eine der beiden Reibflächen kann insbesondere die erste Reibfläche, also die Reibfläche des Bolzens, sein.

Insbesondere kann die Beschichtung eine geringere Härte aufweisen als die Partikel. Hierdurch kann in besonders einfacher Weise ein mehrstufiges Reibverhalten erhalten werden, bei dem die Reibung anfangs durch die Beschichtung und bei zunehmender Belastung, insbesondere zunehmendem Druck und/oder Abrieb, durch die Partikel dominiert wird

Vorzugsweise kann die Beschichtung ein Polymer aufweisen, insbesondere ein Polymer auf Wasserbasis. Beispielsweise kann das Polymer ein Alkydharz, ein Polyesterharz und/oder ein Epoxidharz aufweisen.

Besonders bevorzugt ist es, dass die Mohshärte der Partikel grösser oder gleich 6 ist. Insbesondere wenn die Beschichtung auf einem Spreizkörper oder dem zugehörigen Spreizbereich angeordnet ist kann in diesem Fall eine definierte Reibungserhöhung erzielt werden, die einem unerwünschten verfrühten Herausziehen des Spreizbereichs aus dem Spreizkörper besonders wirksam entgegenwirken kann. Die Mohshärte der Partikel kann kleiner 10 sein, was unter anderem im Hinblick auf den Herstellungsaufwand vorteilhaft sein kann. Beispielsweise können die Partikel eine Mohshärte von 7, Einlehner-Abrasivität von 25 und/oder eine Dichte zwischen 2.2 und 2.7 g/cm3 aufweisen. Insbesondere sind die Partikel harte Partikel, vorzugsweise harte mineralische Partikel. In fachüblicher Weise können unter harten Partikeln Partikel mit einer Mohshärte über 6 verstanden werden.

Eine weitere bevorzugte Ausgestaltung der Erfindung liegt darin, dass zumindest eine Teilmenge aller Partikel, insbesondere eine Teilmenge von mindestens 30 % oder 50 % aller Partikel, vollständig von der Beschichtung umgeben ist. Demgemäss ist also zumindest eine Teilmenge aller Partikel vollständig in der Beschichtung versenkt und tritt nicht an der Oberfläche der Beschichtung zutage. Hierdurch kann ein besonders trennscharfes mehrstufiges Reibverhalten erreicht werden.

Besonders bevorzugt ist es, dass die Partikel eine Korngrösse D50 zwischen 0.1 µm und 10 µm, vorzugsweise zwischen 0.7 µm und 3.0 µm, insbesondere von 1.5 µm aufweisen, und/oder dass die Partikel eine Korngrösse D97 zwischen 0.6 µm und 60 µm, vorzugsweise zwischen 3.0 µm und 12 µm, insbesondere von 6.0 µm aufweisen. In fachüblicher Weise sollen die D-Werte DXX die Grösse angeben, die XX % der Partikel nicht erreichen, da sie kleiner sind als die Grösse. Somit sind bei einem D97 von 6 µm 97% der Partikel kleiner als 6 µm.

Weiterhin hat es sich als besonders vorteilhaft erwiesen, dass die Beschichtung eine Schichtdicke zwischen 0.2 µm und 100 µm, vorzugsweise zwischen 0.5 µm und 25 µm aufweist

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine teilweise längsgeschnittene Ansicht eines in einem Betonsubstrat gesetzten, als Spreizanker ausgebildeten Befestigungselements gemäss einer ersten Ausführungsform;
- Figur 2:: eine Detailansicht des Befestigungselements aus Figur 1 an der in Figur 1 mit einem Kreis gekennzeichneten Stelle am Kontaktbereich zwischen Spreizkörper und Bolzen;
- Figur 3:: eine Seitenansicht des Bolzens des Befestigungselements aus Figur 1;
- Figur 4:: eine teilweise längsgeschnittene Ansicht eines in einem Betonsubstrat gesetzten als Spreizanker ausgebildeten Befestigungselements gemäss einer weiteren Ausführungsform;
- Figur 5:: eine Detailansicht des Befestigungselements aus Figur 4 an der in Figur 4 mit einem Kreis gekennzeichneten Stelle am Kontaktbereich zwischen Spreizkörper und Bolzen;
- Figur 6:: eine teilweise längsgeschnittene Ansicht eines in einem Betonsubstrat gesetzten, als Spreizanker ausgebildeten Befestigungselements gemäss einer dritten Ausführungsform;
- Figur 7:: eine Detailansicht des Befestigungselements aus Figur 6 an der in Figur 6 mit einem Kreis gekennzeichneten Stelle am Kontaktbereich zwischen Spreizkörper und Bolzen; und
- Figuren 8 und 9:: Schematische Ansichten des Spalts zwischen den beiden Reibflächen der vorgenannten Ausführungsbeispiele, in Figur 8 vor dem Reibvorgang und in Figur 9 während des Reibvorgangs.

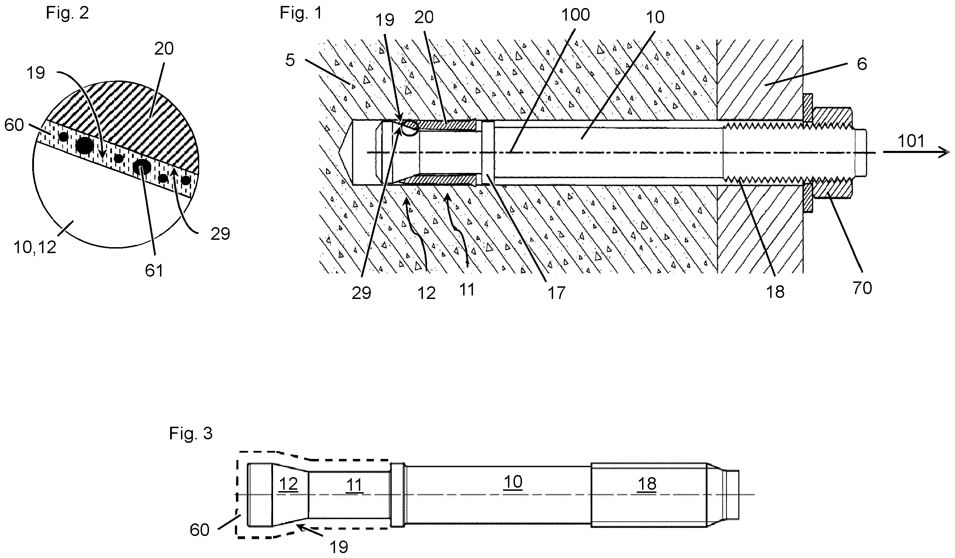

Die Figuren 1 bis 3 zeigen ein erstes Ausführungsbeispiel eines Befestigungselements gemäss der Erfindung. Wie insbesondere Figur 1 zeigt, ist das Befestigungselement als Spreizanker ausgebildet und weist einen Bolzen 10 und einen als Spreizhülse ausgebildeten Spreizkörper 20 auf, welcher den Bolzen 10 umgibt. Der Bolzen 10 weist einen Halsbereich 11 mit konstantem Querschnitt und im Anschluss an den Halsbereich 11 im vorderen Endbereich des Bolzens 10 einen Spreizbereich 12 für den Spreizkörper 20 auf, an welchem die Oberfläche des Bolzens nach hinten hin, vorzugsweise konisch, konvergiert. Der Spreizbereich 12 bildet einen Keil, welcher den Spreizkörper 20 bei axialem Zug im Bolzen radial nach aussen drängen kann. Auf der dem Spreizbereich 12 abgewandten Seite des Halsbereichs 11 weist der Bolzen 10 einen beispielsweise als Ringschulter ausgebildeten Anschlag 17 für den Spreizkörper 20 auf. An seinem dem Spreizbereich 12 entgegengesetzten hinteren Endbereich ist der Bolzen 10 mit einem Aussengewinde 18 versehen, an dem der Bolzen 10 mit einer Mutter 70 verschraubt ist.

Beim Installieren des Befestigungselements wird der Bolzen 10 mit dem Spreizbereich 12 voran entgegen der Auszugsrichtung 101 parallel zur Längsachse 100 des Bolzens 10 in ein Bohrloch im Substrat 5 aus Figur 1 geschoben. Aufgrund des Anschlags 17 wird dabei auch der als Spreizhülse ausgebildete Spreizkörper 20 in das Bohrloch eingebracht. Sodann wird der Bolzen 10, beispielsweise durch Anziehen der Mutter 70, wieder ein Stück weit in der parallel zur Längsachse 100 verlaufenden Auszugsrichtung 101 aus dem Bohrloch herausgezogen. Aufgrund seiner Reibung mit der Bohrlochwand bleibt der als Spreizhülse ausgebildete Spreizkörper 20 dabei zurück und es kommt zu einer Verschiebung des Bolzens 10 relativ zum Spreizkörper 20. Bei dieser Verschiebung dringt der Spreizbereich 12 des Bolzens 10 immer tiefer so in den Spreizkörper 20 ein, dass der Spreizkörper 20 vom Spreizbereich 12 radial erweitert und an die Wand des Bohrlochs angepresst wird, wodurch das Befestigungselement im Substrat 5 verankert wird. Über den Spreizkörper 20 können dann Zugkräfte in den Bolzen 10 eingeleitet werden, welche als Zwangskräfte den Bolzen 10 axial im Bohrloch halten. Der Spreizkörper 20 bildet somit ein Halteelement. Der installierte Zustand des Befestigungselements, in welchem er im Substrat 5 verankert ist, ist in Figur 1 gezeigt. Mittels der Mutter 70 kann ein Anbauteil 6 am Substrat 5 festgelegt werden.

Angemerkt sei, dass der Anschlag 17 fakultativ ist und das beispielsweise auch ein längerer Spreizkörper 20 vorgesehen sein kann, der bis zum Bohrlochmund reicht und von dort, beispielsweise von der Mutter 70, in das Bohrloch eingetrieben wird.

Der Bolzen 10 weist in seinem Spreizbereich 12 eine erste Reibfläche 19 auf und der Spreizkörper 20 weist eine zweite Reibfläche 29 auf, wobei der Spreizkörper 20 und der Bolzen 10 beim Installieren des Befestigungselements, insbesondere beim Einziehen des Spreizbereichs 12 in den Spreizkörper 20, an den beiden Reibflächen 19 und 29 aneinander reiben.

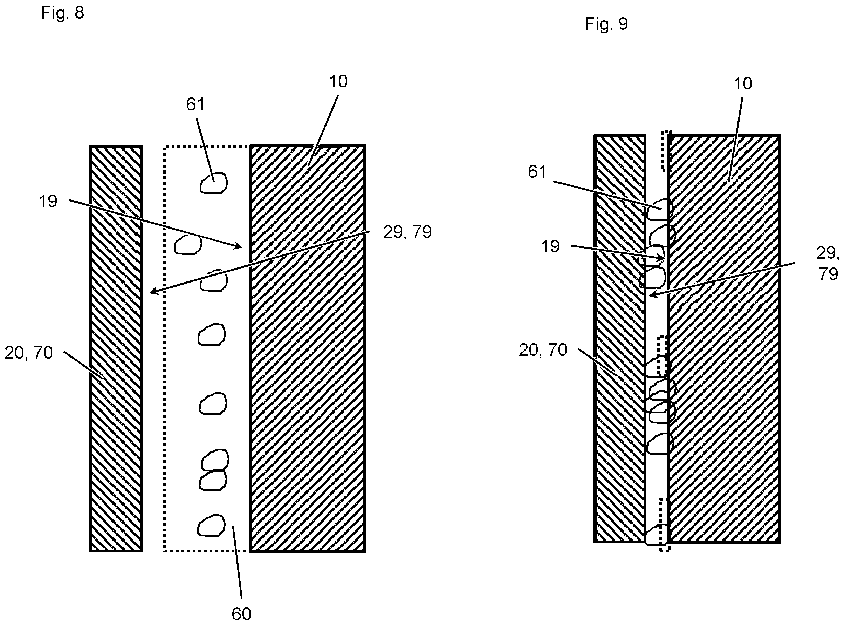

Wie insbesondere in den Figuren 2 und 3 erkennbar ist, weist die erste Reibfläche 19, also die dem Bolzen 10 zugehörige Reibfläche 19, eine Beschichtung 60 auf, in der Partikel 61 eingebettet sind, und deren Wirkung im Detail weiter unten, im Zusammenhang mit den Figuren 8 und 9, erläutert wird. Wie Figur 3 zeigt kann sich die - in Figur 3 mit Strichlinien schematisch stark vergrössert dargestellte - Beschichtung 60 auch über die erste Reibfläche 19 hinaus in den Halsbereich 11 erstrecken, oder auch, nicht dargestellt, auf den gesamten Bolzen 10 erstrecken, was die Herstellung vereinfachen kann.

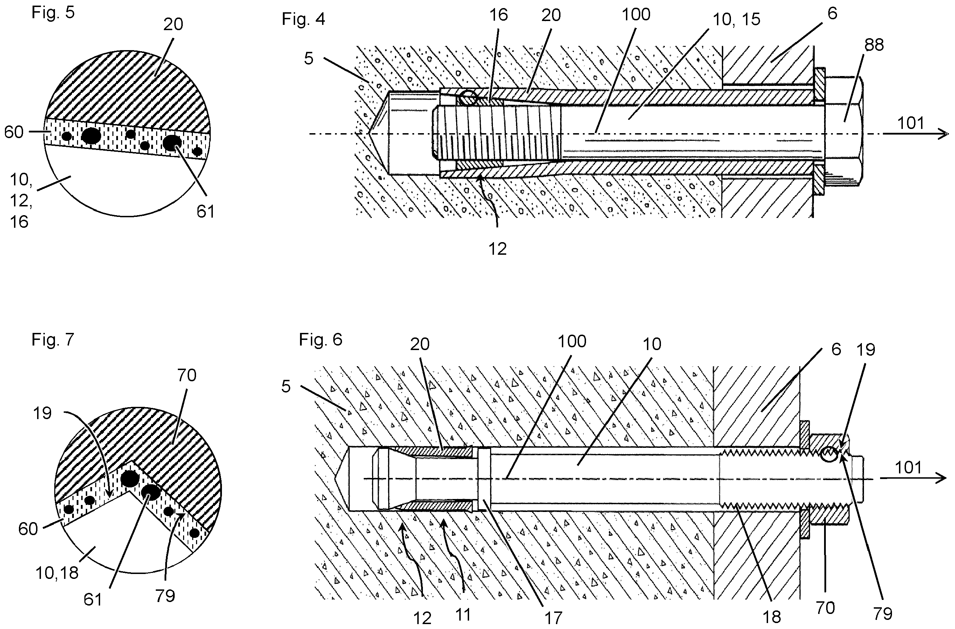

Ein weiteres Ausführungsbeispiel eines Befestigungselements ist in den Figuren 4 und 5 gezeigt. Im Gegensatz zu dem Befestigungselement aus den Figuren 1 bis 3, bei welchem der Bolzen einstückig ausgeführt ist und insbesondere sein Spreizbereich 12 fest mit dem restlichen Bolzen 10 verbunden ist, weist der Bolzen 10 des Ausführungsbeispiels der Figuren 4 und 5 eine Ankerstange 15 und einen von der Ankerstange 15 getrennten Keilkörper 16 auf, wobei der Spreizbereich 12 für den Spreizkörper 20 am Keilkörper 16 gebildet ist. Der Keilkörper 16 mit dem Spreizbereich 12 weist ein Innengewinde auf, welches mit einem Aussengewinde an der Ankerstange 15 des Bolzens 10 korrespondiert. Darüber hinaus reicht beim Befestigungselement der Figuren 4 und 5 der als Spreizhülse ausgebildete Spreizkörper 20, welcher auch mehrteilig sein kann, bis zum Bohrlochmund, und am rückwärtigen Endbereich des Bolzens 10 ist vorzugsweise ein verbreiterter Kopf 88 mit einer Aussenmehrkantstruktur drehfest an der Ankerstange 15 angeordnet.

Zum Setzen des Befestigungselements der Figuren 4 und 5 wird die Ankerstange 15, vorzugsweise über den Kopf 88, um die Längsachse 100 in Drehung versetzt. Die korrespondierenden Gewinde wandeln diese Drehbewegung der Ankerstange 15 in eine Axialbewegung des Keilkörper 16 mit dem Spreizbereich 12 relativ zur Ankerstange 15 und damit relativ zum Spreizkörper 20 um, was zum Einziehen des Spreizbereichs 12 in den Spreizkörper 20 und zum Verankern des Befestigungselements führt. Abermals bildet also der Spreizkörper ein Halteelement, mit dem sich als Zugkräfte ausgebildete Zwangskräfte in den Bolzen einleiten lassen.

Auch beim Befestigungselement der Figuren 4 und 5 weist der Bolzen 10 an einer in seinem Spreizbereich 12 angeordneten ersten Reibfläche 19 eine Beschichtung 60 mit Partikeln 61 auf, welche einer am Spreizkörper 20 ausgebildeten zweiten Reibfläche 29 gegenüberliegt, wobei der Spreizkörper 20 und der Bolzen 10 beim Installieren des Befestigungselements, insbesondere beim Einziehen des Spreizbereichs 12 in den Spreizkörper 20, an den beiden Reibflächen 19 und 29 aneinander reiben. Die Wirkung der Beschichtung ist weiter unten im Zusammenhang mit den Figuren 8 und 9 erläutert.

Die Figuren 6 und 7 zeigen ein weiteres Ausführungsbeispiel eines Befestigungselements. Das Befestigungselement der Figuren 6 und 7 entspricht im wesentlichen dem Befestigungselement der Figuren 1 bis 3, so dass insoweit auf die zugehörige Beschreibung verwiesen werden kann. Im Gegensatz zum Ausführungsbeispiel der Figuren 1 bis 3 ist beim Ausführungsbeispiel der Figuren 6 und 7 die zweite Reibfläche 79 an der Mutter 70 und die mit der zweiten Reibfläche 79 korrespondierende erste Reibfläche 19 an dem zur Mutter 70 zugehörigen Aussengewinde 18 des Bolzens. Demgemäss ist die erfindungsgemässe Beschichtung 60 mit den Partikeln 61 an der Mutter 70 oder/und am Aussengewinde 18 des Bolzens 10 angeordnet. Auch die Mutter 70 kann also ein Halteelement zur Zugkrafteinleitung in den Bolzen 10 bilden. Die Wirkung der Beschichtung 60, in der Partikel 61 eingebettet sind, wird abermals im Detail weiter unten, im Zusammenhang mit den Figuren 8 und 9, erläutert.

Es sind auch Ausgestaltungen denkbar, bei denen sich sowohl zwischen Mutter und Bolzen als auch zwischen Spreizelement und eine erfindungsgemässe Beschichtung mit Partikeln befindet, also insbesondere eine Kombination der Ausgestaltung der Figuren 1 bis 3 mit der Ausgestaltung der Figuren 6 und 7.

Die Figuren 8 und 9 illustrieren schematisch den an den Reibflächen 19 und 29 beziehungsweise 79 der vorgenannten Ausführungsbeispiele wirkenden Mechanismus. Die Beschichtung 60 ist hier beispielhaft eine relativ weiche Polymermatrix mit niedrigem Reibwert, und die Partikel 61 weisen demgegenüber eine deutlich höhere Härte auf. Bei niedrigen Anpressdrücken zwischen den Reibflächen 19 und 29, welche zu Beginn der Installation des Befestigungselements vorliegen, wird die Reibung durch die - vergleichsweise niedrige - Reibung der polymeren Beschichtung 60 bestimmt. Bei hohen Drücken und/oder längeren Reibwegen, welche bei fortschreitender Installation oder bei besonderen Belastungen, insbesondere zyklischen Belastungen, des Befestigungselements vorliegen können, wird die relativ wenig tragfähige Beschichtung 60 entfernt, zerstört oder/und delaminiert. Die vergleichsweise harten und abriebfesten Partikel 61 verbleiben jedoch zwischen den Reibflächen 19 einerseits und 29 oder 79 andererseits, und können fortan die Reibeigenschaften bestimmen. Insbesondere können die Partikel 61 einem Festfressen und/oder einer Kaltverschweissung der Reibflächen 19 einerseits und 29 oder 79 andererseits effektiv entgegenwirken und/oder eine gezielte Reibungserhöhung bei hoher Belastung bewirken, insbesondere wenn die Partikel 61 relativ hart sind.

Insbesondere kann durch das erfindungsgemässe Einbringen von harten Partikel 61 in die Beschichtung 60 ein kolloidaler Dispersionsfilm bereitgestellt werden. Mit zunehmender Belastung kann die matrixbildende polymere Beschichtung 60 kollabieren, wobei die harten Partikel 61 zwischen den metallischen Reibflächen 19 einerseits und 29 oder 79 andererseits zurückbleiben und eine harte Trennschicht zwischen diesen Reibflächen bilden.

## Patentansprüche

1. Befestigungselement mit
- einem Bolzen (10) und
- einem am Bolzen (10) angeordneten Halteelement zum Einleiten von Zugkräften in den Bolzen (10),
- wobei der Bolzen (10) eine metallische erste Reibfläche (19) aufweist und wobei das Halteelement eine der ersten Reibfläche (19) zugeordnete metallische zweite Reibfläche (29, 79) aufweist,
**dadurch gekennzeichnet,**
**dass** auf zumindest einer der beiden Reibflächen (19; 29, 79) eine Beschichtung (60) angeordnet ist, in der Partikel (61) eingebettet sind.

2. Befestigungselement nach Anspruch 1,
**dadurch gekennzeichnet,**
**dass** das Halteelement ein Spreizkörper (20) ist, und
**dass** der Bolzen (10) einen Spreizbereich (12) für den Spreizkörper (20) aufweist.

3. Befestigungselement nach Anspruch 1,
**dadurch gekennzeichnet,**
**dass** das Halteelement eine Mutter (70) ist, die mit dem Bolzen (10) verschraubt ist.

4. Befestigungselement nach einem der vorstehenden Ansprüche,
**dadurch gekennzeichnet,**
**dass** die Beschichtung (60), in der Partikel (61) eingebettet sind, auf der ersten Reibfläche (19) angeordnet ist.

5. Befestigungselement nach einem der vorstehenden Ansprüche,
**dadurch gekennzeichnet,**
**dass** die Beschichtung (60) eine geringere Härte aufweist als die Partikel (61).

6. Befestigungselement nach einem der vorstehenden Ansprüche,
**dadurch gekennzeichnet,**
**dass** die Beschichtung (60) ein Polymer aufweist.

7. Befestigungselement nach einem der vorstehenden Ansprüche,
**dadurch gekennzeichnet,**
**dass** die Mohshärte der Partikel (61) grösser oder gleich 6 ist.

8. Befestigungselement nach einem der vorstehenden Ansprüche,
**dadurch gekennzeichnet,**
**dass** zumindest eine Teilmenge aller Partikel (61) vollständig von der Beschichtung (60) umgeben ist.

9. Befestigungselement nach einem der vorstehenden Ansprüche,
**dadurch gekennzeichnet,**
**dass** die Partikel (61) eine Korngrösse D50 zwischen 0.1 µm und 10 µm, vorzugsweise zwischen 0.7 µm und 3.0 µm, insbesondere von 1.5 µm aufweisen, und/oder dass die Partikel (61) eine Korngrösse D97 zwischen 0.6 µm und 60 µm, vorzugsweise zwischen 3.0 µm und 12 µm, insbesondere von 6.0 µm aufweisen.

10. Befestigungselement nach einem der vorstehenden Ansprüche,
**dadurch gekennzeichnet,**
**dass** die Beschichtung (60) eine Schichtdicke zwischen 0.5 µm und 25 µm aufweist.
